# EUROPÄISCHE PATENTANMELDUNG

(11) **EP 3 059 136 A1**
(43) Veröffentlichungstag der Anmeldung: **24.08.2016**
(21) Anmeldenummer: 15201531.9
(22) Anmeldetag: 21.12.2015
(51) Int. Cl.: B61D 49/00, B60R 1/06, B60R 1/074

(54) **SCHIENENFAHRZEUG UND AUSSENSPIEGELVORRICHTUNG**

(30) Priorität: 17.02.2015 DE 102015202787
(71) Anmelder: Voith Patent GmbH, 89522 Heidenheim (DE)
(72) Erfinder: Ahrens, Michael, 38300 Wolfenbüttel (DE); Scholz, Denny, 38300 Wolfenbüttel (DE)

(57) **Zusammenfassung**

Die Erfindung betrifft eine Außenspiegelvorrichtung (1) für Schienenfahrzeuge, umfassend zumindest ein Spiegelelement (2), dessen Position über einen antreibbaren Koppelmechanismus (10) verstellbar ist. Die Erfindung ist dadurch gekennzeichnet, dass der Koppelmechanismus (10) als Schwenk-Schiebemechanismus, insbesondere Schubschwingen-Anordnung ausgebildet ist, umfassend zumindest eine ortsfest gelagerte Schwinge (12) und zumindest eine, ein entlang einer Führung führbares Schiebeelement (14) umfassende Schiebeeinrichtung, wobei das Spiegelelement (2) an einem drehbar mit dem Schiebeelement (14) und mit der Schwinge (12) gekoppelten Übertragungsglied (15)wenigstens mittelbar befestigt ist.

## Beschreibung

Die Erfindung betrifft ein Schienenfahrzeug und eine Außenspiegelvorrichtung mit zumindest einem Spiegelelement für Schienenfahrzeuge.

Bei Hochgeschwindigkeitszügen, die durch eine aerodynamische Gestaltung charakterisiert sind und bei S- Bahnen ist die Sicherheit im Bereich der Einstiege auf Bahnsteigseite häufig nur manuell überwachbar. Der Zugführer selbst hat nur die Möglichkeit aus dem Fenster nach hinten zu schauen, was ihm jedoch nur einen sehr eingeschränkten Sichtbereich ermöglicht oder sich auf automatisch schließende Türen zu verlassen, was jedoch wiederum ein hohes Unfallpotential darstellt.

Aus dem Bereich der Rangierfahrzeuge ist es bekannt zur Erfüllung der mit dieser Funktion verbundenen Aufgaben Außenspiegelvorrichtungen einzusetzen, die im Bereich des Führerstandes seitlich an der Außenwand befestigt sind. Diese stehen häufig relativ weit ab und sind in der Position fix oder nur manuell verstellbar.

Aus der Druckschrift CN 201619519 U ist eine Außenspiegelvorrichtung vorbekannt, umfassend zumindest ein Spiegelelement, welches über einen Koppelmechanismus zumindest zwischen zwei Positionen verschwenkbar ist, um negative Umwelteinflüsse, insbesondere ein unerwünschtes Beschlagen der Spiegel zu vermeiden. Dazu ist eine aufwendige Viergelenkkinematik vorgesehen, die das Spiegelelement von einer ausgestellten Position in eine gekapselte Position in einer Spiegelaufnahme verschwenkt.

Der Erfindung liegt die Aufgabe zugrunde, eine Außenspiegelvorrichtung für Schienenfahrzeuge, insbesondere Hochgeschwindigkeitszüge und S-Bahnen zu entwickeln, welche konstruktiv einfach, klein und kompakt baut und funktionssicher ist sowie den unterschiedlichen Anforderungen von Fahrbetrieb (möglichst kein zusätzlicher Fahrwiderstand) und Bahnhofsbetrieb, insbesondere der Sicherheit der Fahrgäste gerecht wird.

Die erfindungsgemäße Lösung ist durch die Merkmale der Ansprüche 1 und 11 charakterisiert. Vorteilhafte Ausbildungen sind in den Unteransprüchen wiedergegeben.

Ein Schienenfahrzeug mit zumindest einer Außenspiegelvorrichtung im Bereich der seitlichen Wandung, geeignet zur Erfassung von in Längsrichtung rückwärtigen zur Außenwand benachbarten Bereichen mit zumindest einem Spiegelelement, ist dadurch gekennzeichnet, dass das Spiegelelement zumindest in zwei Positionen gegenüber einem Außenwandbereich des Schienenfahrzeuges verbringbar ist - eine erste, eine winklige Lage gegenüber dem Außenwandbereich beschreibende Beobachtungsposition zur Erfassung der rückwärtigen Bereiche des Schienenfahrzeuges und eine zweite, am Außenwandbereich anliegende oder zumindest teilweise in die Wandung des Außenwandbereiches versenkbare Lage beschreibende Position.

Die beiden Grundpositionen ermöglichen zum einen eine erhebliche Erleichterung für das Fahrpersonal zur Erkennung kritischer Situationen beim Ein- und Ausfahren in Bahnhöfen und erlauben zum anderen im normalen Fahrbetrieb eine widerstandsfreie und vor allem vor Umwelteinflüssen geschützte Anordnung des Spiegelelementes gegenüber der Außenhülle des Schienenfahrzeuges. Durch die Möglichkeit des Einklappens kann die Außenspiegelvorrichtung hinsichtlich ihrer Dimensionierung auch sehr klein gehalten werden, da nicht die im Fahrbetrieb auf diese einwirkenden Kräfte bei der Auslegung mit zu berücksichtigen sind.

Derartige Außenspiegelvorrichtungen sind dabei im Bereich des vorderen Endes des Schienenfahrzeuges, insbesondere dem Führerstand angeordnet und sollen es dem im Führerstand befindlichen Beobachter, insbesondere Zugführer ermöglichen, den rückwärtigen Bereich des Schienenfahrzeuges zu beobachten. Die erste Position des Spiegelelementes wird dabei in der Regel bei Stillstand, insbesondere im Bahnhof angewandt, um Unregelmäßigkeiten zu erkennen und Unfälle bei der Ein- und Ausfahrt zu vermeiden. Diese Position ist ferner auch im Rangierbetrieb von Vorteil.

Um während der Fahrt aerodynamisch keine Beeinträchtigung durch hervorstehende Elemente im Bereich des vorderen Zugendes zu haben, ist das Spiegelelement in die zweite Position verbringbar. In dieser schließt das Spiegelelement bzw. das dieses tragende Element bündig mit der Außenwandung ab oder ist sogar gegenüber dieser versetzt im Sinne einer Absenkung einbringbar.

Die Anordnung der Außenspiegelvorrichtung erfolgt im Einzelnen derart gegenüber einem Fensterbereich des vorderen Endbereiches des Schienenfahrzeuges, dass das Führungspersonal von Innen auf diesen in der ausgefahrenen Position blicken kann. Die Anordnung kann dabei im Bereich der Erstreckung eines Fensterbereiches in Längsrichtung oder davor erfolgen.

Eine erfindungsgemäß ausgebildete Außenspiegelvorrichtung für Schienenfahrzeuge, umfassend zumindest ein Spiegelelement, dessen Position über einen antreibbaren Koppelmechanismus verstellbar ist, ist dadurch gekennzeichnet, dass der Koppelmechanismus als Schwenk-Schiebemechanismus, insbesondere Schubschwingen-Anordnung ausgebildet ist, umfassend zumindest eine ortsfest gelagerte Schwinge und zumindest eine, ein entlang einer Führung führbares Schiebeelement umfassende Schiebeeinrichtung, wobei das Spiegelelement an einem drehbar mit dem Schiebeelement und mit der Schwinge gekoppelten Übertragungsglied wenigstens mittelbar befestigt ist.

Die Schubschwingen-Anordnung stellt dabei eine konstruktiv einfache und vor allem wenig störanfällige Lösung dar und erlaubt auf einfache Art unterschiedliche Antriebskonzepte. Gemäß einer ersten besonders vorteilhaften Ausführung ist zumindest ein Antrieb der Schubschwingen-Anordnung der Schwinge zugeordnet. Gemäß einer zweiten Ausführung ist der Antrieb der Schubschwingen-Anordnung der Schiebeeinrichtung zugeordnet, insbesondere wird dieser vom Schiebeelement gebildet oder ist in diesem integriert.

Insbesondere die erste Ausführung erlaubt konstruktiv sehr einfach zu realisierende Lösungen und die Ankopplung unterschiedlichster Antriebssysteme.

"Wenigstens mittelbar befestigt" beinhaltet dabei die Möglichkeit der direkten Befestigung frei von einer Relativbewegungsmöglichkeit zum Übertragungsglied, wodurch eine feste und eindeutige Zuordnung wischen der jeweiligen Stellung des Übertragungsgliedes und des Spiegelelementes gegeben ist. Denkbar ist auch die direkte Befestigung mit Relativbewegungsmöglichkeit, beispielsweise über ein Drehlager. Desweiteren beinhaltet "wenigstens mittelbar befestigt" auch die Befestigung über zwischengeordnete Elemente oder Mechanismen, wobei auch Möglichkeiten zusätzlicher Mechanismen eingeschlossen sind, die eine zusätzliche Relativbewegung zwischen Übertragungsglied und Spiegelelement ermöglichen.

Im Einzelnen kann das Spiegelelement gemäß einer der nachfolgend genannten Varianten mit dem Übertragungsglied gekoppelt werden:
- das Spiegelelement ist direkt am Übertragungsglied befestigt:
- das Spiegelelement ist an einem am Übertragungsglied befestigten Bauteil befestigt;
- das Spiegelelement ist am Übertragungsglied oder einem mit diesem verbunden Bauteil relativ zu diesem verschiebbar und/oder verdrehbar gelagert;
- das Spiegelelement ist über einen Übertragungsmechanismus am Übertragungsglied gelagert.

Die direkte Befestigung bietet den Vorteil der eindeutigen Zuordnung zwischen der Lage des Übertragungsgliedes und des Spiegelelementes.
Die Möglichkeit der Anordnung an einem mit dem Übertragungsglied gekoppelten Bauteil findet vor allem bei Anordnung an einer Abdeckung zum Schutz und zur Versteifung Anwendung.

Die Möglichkeit einer Relativbewegung zwischen Übertragungsglied und Spiegelelement erlaubt eine bessere Justierung. Demgegenüber erlaubt die Ankopplung über einen Übertragungsmechanismus gegenüber vorgenannten Lösungen eine weitere und besonders feinfühlige Einstellung.

Im Einzelnen kann der eine Antrieb von einem Antrieb ausgewählt aus der nachfolgenden Gruppe von Antrieben oder einer Kombination aus diesen ausgebildet werden:
- einem pneumatischen Antrieb/ einer pneumatischen Stelleinrichtung
- einem hydraulischen Antrieb/ einer hydraulischen Stelleinrichtung
- einem elektrischen Antrieb / einer elektrischen Stelleinrichtung.
In einer besonders vorteilhaften Ausbildung werden pneumatische Antriebe oder Stelleinrichtungen zum Einsatz gelangen, da diese über ohnehin in Schienenfahrzeugen vorhandene Systeme gespeist werden können.

In einer vorteilhaften Weiterentwicklung ist es vorgesehen, dass die Außenspiegelvorrichtung zumindest eine Trägereinrichtung zur zumindest teilweisen Lagerung des Koppelmechanismus und/oder Befestigung am Außenwandbereich umfasst. Dieser sind in Funktionskonzentration die Aufgaben Befestigung an der Wandung/Ausrichtung gegenüber dem Außenwandbereich sowie eine Trag-und Lagerfunktion für die Komponenten des Koppelmechanismus als auch des Antriebes zugeordnet. Ferner erlaubt eine entsprechende Ausgestaltung auch die Ausbildung einer vollständig vormontierten Einheit, die gemäß einer besonders bevorzugten Weiterbildung bei Vorsehen entsprechender Dichteinrichtungen auch vollständig gegenüber Umwelteinflüssen gekapselt sein kann. Dazu ist die Trägereinrichtung derart ausgeführt, dass diese zumindest eines der nachfolgenden Merkmale aus der Gruppe von Merkmalen umfasst:
- Aufnahmebereiche zur Befestigung und/oder Lagerung von Elementen und Gliedern des Koppelmechanismus
- Aufnahmebereiche zur Befestigung und/oder Lagerung zumindest eines Antriebes
- Anlage- und/oder Befestigungsbereiche zur Anlage/dem Vorsehen von Befestigungselementen zur Befestigung an der Wandung eines Schienenfahrzeuges.

In einer besonders bevorzugten Ausführung ist die Trägereinrichtung als ein, einen zumindest in Betätigungsrichtung des Spiegelelementes offenen Innenraum umschließendes Element, geeignet zur zumindest teilweisen Aufnahme durch die den Außenwandbereich beschreibenden Wandung oder Anlage an dieser ausgeführt und die in Betätigungsrichtung des Spiegelelementes vorgesehene Öffnung ist durch eine Abdeckung verschließbar. Dadurch ist das Spiegelelement in der zweiten Position weitestgehend geschützt vor äußeren Einflüssen und keinen äußeren Kräften ausgesetzt. Um zusätzlich auch die Einwirkung von Nässe und Feuchtigkeit ausschließen zu können, ist vorzugsweise eine Abdichtung zwischen Abdeckung und Trägereinrichtung vorgesehen.

Bezüglich der Ausbildung der Schiebeeinrichtung besteht eine Mehrzahl von Möglichkeiten. Im Einzelnen kann dabei hinsichtlich der Art der Führung, der konstruktiven Ausgestaltung und der Anordnung unterschieden werden. Die Führungen können dabei in Form einer Kulisse, Führungsstange oder Schiene oder Ausnehmung (eingearbeitet in Material) bereitgestellt werden.
Diese können ferner als Einfach- oder Parallelführung ausgeführt sein. Letztgenannte Ausbildung erlaubt kleinere Einheiten.
Vorzugsweise ist die einzelne Führung zumindest teilweise als Geradführung ausgebildet.

In einer besonders vorteilhaften Ausführung
- ist die Schwinge von einer in der Trägereinrichtung drehbar gelagerten Antriebswelle und einem drehfest mit dieser verbundenen Antriebshebel gebildet;
- die Schiebeeinrichtung umfasst zumindest eine an der Trägereinrichtung gelagerte oder befestigte Führung, an welcher ein Schiebeelement führbar;
- ist das drehbar am Schiebeelement gelagerte Übertragungselement von einem weiteren Hebel gebildet, der mit dem Antriebshebel über ein Drehgelenk verbunden ist und über das Drehgelenk hinaus verlängert ausgebildet ist;
- ist das Spiegelelement direkt an dem weiteren Hebel im Verlängerungsbereich befestigt, wobei eine Abdeckung vorgesehen ist, die entweder separat am Hebel befestigt ist oder aber das Spiegelelement trägt.

Die erfindungsgemäße Lösung wird nachfolgend anhand von Figuren erläutert. Darin ist im Einzelnen folgendes dargestellt:
- Figur 1: zeigt am Beispiel eines Ausschnittes aus einem Frontendbereich eines Schienenfahrzeuges eine erfindungsgemäße Außenspiegelvorrichtung;
- Figuren 2a bis 2c: verdeutlichen in schematisiert vereinfachter Darstellung den Grundaufbau und die Grundfunktion einer erfindungsgemäßen Außenspiegelvorrichtung;
- Figuren 3a und 3b: zeigen beispielhaft einen Koppelmechanismus mit Zuordnung des Antriebes zur Schwinge in zwei Positionen des Spiegelelementes;
- Figur 4: zeigt beispielhaft einen Koppelmechanismus mit Zuordnung des Antriebes zur Schiebeeinrichtung in der zweiten Position des Spiegelelementes;
- Figuren 5a und 5b: zeigen eine besonders vorteilhafte Ausbildung einer Schubschwingen-Anordnung in zwei Ansichten.

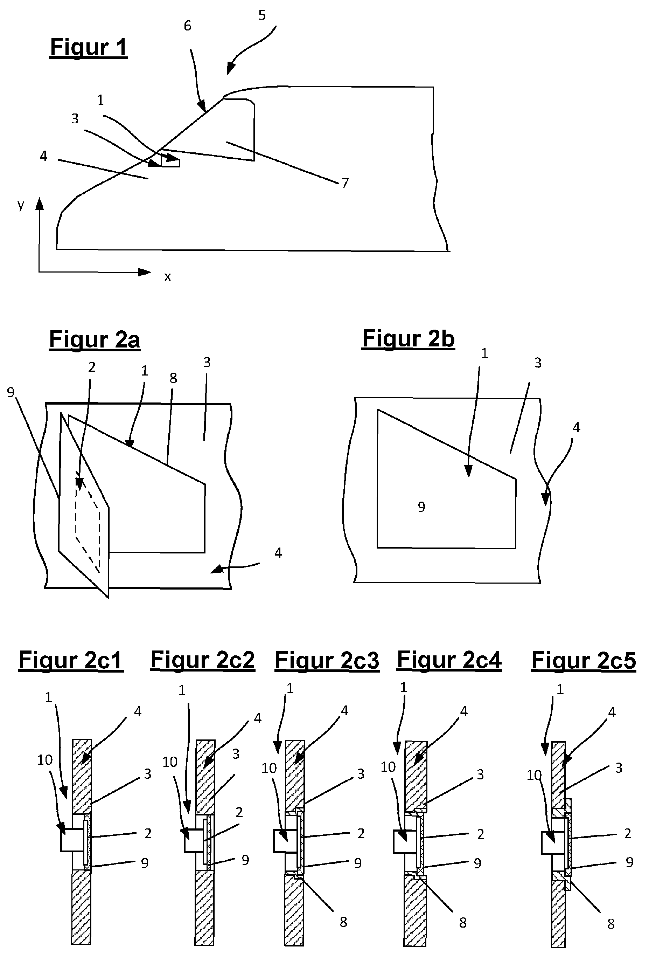

Die Figur 1 zeigt in schematisiert vereinfachter Darstellung eine Anordnung einer erfindungsgemäßen Außenspiegelvorrichtung 1, umfassend zumindest ein Spiegelelement 2 an einem Schienenfahrzeug 5. Die Anordnung erfolgt gegenüber einem Außenwandbereich 3 einer Wandung 4 des Schienenfahrzeuges 5. Die Anordnung erfolgt erfindungsgemäß derart, dass es dem Beobachter aus einem Führerstand 6 im vorderen Endbereich des Schienenfahrzeuges 5 möglich ist, bei Blick aus dem Fenster 7 ohne den Führerstand verlassen zu müssen oder sich hinauslehnen zu müssen, den in Längsrichtung des Schienenfahrzeuges 5, die mit der X-Richtung des angelegten Koordinatensystems zusammenfällt, rückwärtigen Bereich einsehen zu können, insbesondere die Einstiegsbereiche. Das Spiegelelement 2 ist dazu gegenüber dem Außenwandbereich 3 in eine zu diesem winklige und vorzugsweise auch beabstandete Lage verbringbar. Diese beschreibt eine erste Position, die sogenannte Beobachtungsposition und ist durch eine gegenüber der Außenwandung winklige und ggf. abstehende und zumindest einen Teilbereich der rückwärtigen Einstiegsbereiche des Schienenfahrzeuges erfassende Lage des Spiegelelementes 2 charakterisiert. Die Anordnung der Außenspiegelvorrichtung 1 gegenüber dem Fenster 7 erfolgt dazu in Längsrichtung des Schienenfahrzeuges 2 entweder innerhalb der Erstreckung des Fensters 7 in Längsrichtung oder diesem in Längsrichtung vorgeordnet.

Um im Fahrbetrieb beim Einsatz in Hochgeschwindigkeits-Schienenfahrzeugen aerodynamisch keine Beeinträchtigung durch hervorstehende Teile hervorzurufen sowie diese nicht auf die dabei wirkenden hohen Kräfte auslegen zu müssen, ist das Spiegelelement 2 erfindungsgemäß in eine zweite Position verbringbar, in welcher dieses entweder am Außenwandbereich 3 anliegt oder aber vorzugsweise in die diesen bildende Wandung 4 versenkbar ist. In dieser schließt das Spiegelelement 2 bzw. das dieses tragende Element bündig mit der Außenwandung 3 ab oder ist sogar gegenüber dieser versetzt im Sinne einer Absenkung einbringbar.

Die Figuren 2a bis 2c verdeutlichen beispielhaft anhand eines Ausschnittes aus der Wandung 4 des Schienenfahrzeuges 5 in schematisiert stark vereinfachter Darstellung den Grundaufbau und die Grundfunktion einer erfindungsgemäß ausgeführten Außenspiegelvorrichtung 1 für Schienenfahrzeuge 5 mit zumindest einem Spiegelelement 2.

Die Figur 2a zeigt dabei eine Außenspiegelvorrichtung 1 mit einem Spiegelelement 2 in der ersten Position. Die Außenspiegelvorrichtung 1 umfasst eine Trägereinrichtung 8, beispielsweise in Form eines Rahmenelementes, welches in eine dafür vorgesehene Öffnung oder Ausnehmung in der Wandung 4 von der Außenseite betrachtet, einbringbar ist. Das Rahmenelement dient dabei der Befestigung an der Wandung 4 und der Abstützung bzw. Lagerung von zumindest Teilen eines das Spiegelelement 2 zwischen den Positionen bewegenden Koppelmechanismus 10.

Das Spiegelelement 2 ist in der ersten Position gemäß Figur 2a gegenüber dem Außenwandbereich 3 einer Wandung 4 des Schienenfahrzeuges in einem Winkel angeordnet. Das Spiegelelement 2 ist in der dargestellten Ausbildung an der zur Außenwandung gerichteten Seite an einer Abdeckung 9 befestigt und daher nur mittels unterbrochener Linie dargestellt. Die Figur 2b zeigt demgegenüber die zweite Position, welche durch eine an am Außenwandbereich 3 anliegende oder zumindest teilweise, vorzugsweise vollständig in diese versenkbare und aerodynamisch günstige Lage charakterisiert ist. Mögliche Lagen in der zweiten des Spiegelelementes 2 und der Abdeckung 9 gegenüber dem Außenwandbereich 3 der Wandung 4 sind beispielhaft in den Figuren 2c1 bis 2c3 anhand eines Axialschnittes durch die Wandung 4 wiedergegeben. Zwischen den beiden Grundpositionen kann der Spiegel frei einstellbar sein.

Die einzelnen Positionen des Spiegelelementes 2 werden über einen Koppelmechanismus 10 realisiert. Dieser ist nur schematisiert als Blackbox angedeutet. Der Koppelmechanismus 10 umfasst in einer besonders vorteilhaften Ausbildung einen Schwenk-Schiebemechanismus, insbesondere eine Schubschwingen-Anordnung 11 und einen Antrieb 17.

Figur 2c1 zeigt eine Ausbildung, bei welcher das Spiegelelement 2 an der Innenseite der Abdeckung 9 angeordnet bzw. befestigt ist und die Abdeckung 9 in der zweiten Position bündig mit der Außenfläche des dem Außenwandbereiches 3 der Wandung 4 abschließt. Die Figur 2c2 zeigt demgegenüber eine Ausführung mit Einsenkung des Spiegelelementes 2 innerhalb des Außenwandbereiches 3 in die Wandung 4. Dazu ist in dieser eine Ausnehmung oder Öffnung vorgesehen.

Figur 2c3 zeigt beispielhaft eine Ausbildung gemäß Figur 2c1, bei welcher die Außenspiegelvorrichtung 1 eine Trägereinrichtung 8 in Form eines Rahmens umfasst, der in eine Ausnehmung oder Öffnung im Außenwandbereich 3 der Wandung 4 einbringbar ist. Die Befestigung der Trägereinrichtung 8 kann beliebig erfolgen. Vorzugsweise werden lösbare Verbindungsarten gewählt. Diese können über Kraft- oder Formschluss realisiert werden.

Die Figur 2c4 zeigt eine Ausführung gemäß Figur 2c2, jedoch mit zusätzlicher Trägereinheit 8.

Demgegenüber verdeutlicht Figur 2c5 eine Ausführung mit Trägereinheit 8 und Anlage des Spiegelelementes 2 bzw. der diese tragenden Abdeckung 9 an der Außenfläche des Außenwandbereiches 3 der Wandung 4.

Die Ausführungen sind beispielhaft und nicht auf eine konkrete Geometrie der Trägereinrichtung 8 beschränkt. Gleiches gilt für die Abdeckung 9, welche hier beispielhaft als Abdeckplatte wiedergegeben ist.

Vorzugsweise kommen Ausführungen mit Trägereinrichtungen 8 zum Einsatz, da an diesen der Koppelmechanismus lagerbar ist, wodurch die Außenspiegelvorrichtung als kompakte vormontierte Einheit bereitstellbar ist.

Der Koppelmechanismus 10 ist hinsichtlich seiner Funktionsweise als Schwenk-Schiebemechanismus, insbesondere Schubschwingen-Anordnung 11 ausgeführt.

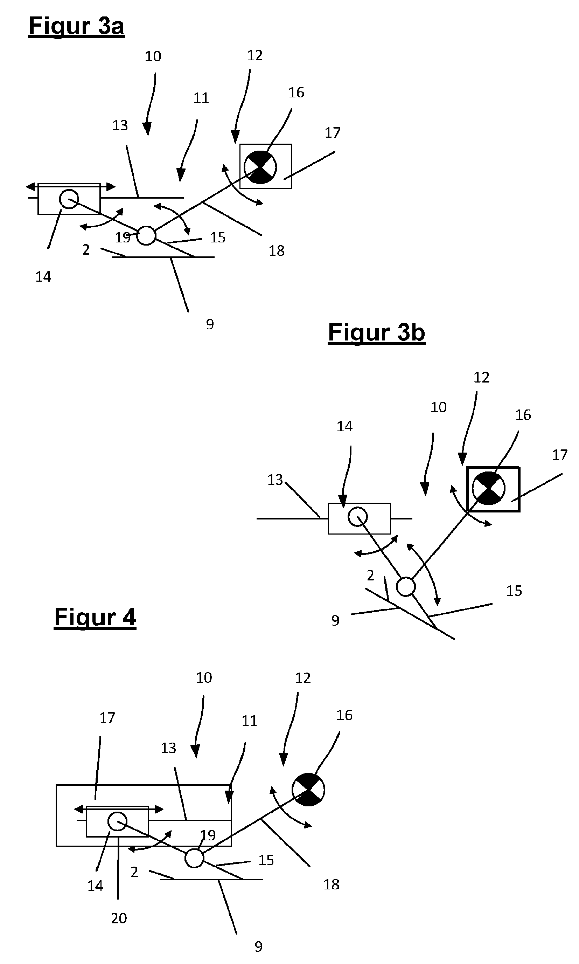

Die Figuren 3a und 3b zeigen in schematisiert stark vereinfachter Darstellung den Aufbau des Koppelmechanismus 10 in Form einer Schubschwingen-Anordnung 11 gemäß einer ersten besonders vorteilhaften Ausbildung mit den zwei Positionen des Spiegelelementes 2. Es versteht sich, dass grundsätzlich auch zwischen den beiden Positionen verschiedene Positionen des Spiegelelementes 2 möglich sind.

Die Schubschwingen-Anordnung 11 umfasst eine Schwinge 12 und ein, an einer Führung 13 führbares Schiebeelement 14. Das Schiebeelement 14 ist über ein drehbar an diesem angelenktes Übertragungsglied 15 mit der Schwinge 12 vorzugsweise direkt gekoppelt. Das Drehgelenk zur Anlenkung des Übertragungsgliedes 15 am Schiebeelement 14 ist mit 20 bezeichnet. Die Schwinge 12 wird im einfachsten Fall von einem ortsfest, vorzugsweise gestellfest an der Trägereinrichtung 8 drehbar gelagerten Übertragungsglied 18 gebildet. Das dazu vorgesehene Drehgelenk bzw. Drehlager ist mit 16 bezeichnet. Die Kopplung zwischen Übertragungsglied 15 und Schwinge 12 erfolgt vorzugsweise direkt über ein Drehgelenk 19.

Die Führung 13 ist im einfachsten Fall derart ausgebildet und ausgerichtet, eine translatorische Bewegung des Schiebeelementes 14 zur ermöglichen. In besonders vorteilhafter Ausbildung fällt in Einbaulage betrachtet die Ausrichtung der Führung mit der Längsrichtung zusammen. Andere Ausführungen sind bei entsprechender Auslegung der Kinematik jedoch ebenfalls denkbar.

Das Spiegelelement 2 ist am Übertragungsglied 15 gelagert, vorzugsweise direkt befestigt, d.h. frei von der Möglichkeit einer zusätzlichen Relativbewegung zwischen Spiegelelement 2 und Übertragungsglied 15, wodurch eine besonders einfache und funktionssichere Ausführung der Außenspiegelvorrichtung bereitstellbar ist. Die Befestigung kann am Übertragungsglied 15 zwischen den Drehlagern 19 und 20 erfolgen. Vorzugsweise ist jedoch das Übertragungselement 15 über die Kopplung mit der Schwinge 12 hinaus verlängert ausgeführt und erlaubt je nach geometrischer Ausführung unterschiedliche Möglichkeiten der Anbindung des Spiegelelementes 2.

Bei der in den Figuren 3a und 3b wiedergegebenen Ausführung ist das Übertragungselement 15 mit der Abdeckung 9 verbunden, welche wiederum das Spiegelelement 2 trägt.

Die Figur 3a zeigt das Spiegelelement in der zweiten, d.h. eingeschwenkten Position, während Figur 3b die erste, d.h. Beobachtungsposition wiedergibt, in welcher das Spiegelelement 2 gegenüber der Außenwandung in einem Winkel ausgerichtet ist.

In der Ausführung gemäß den Figuren 3a und 3b wird der Antrieb 17 über die Schwinge 12 realisiert. Als Antriebseinheiten sind pneumatische, hydraulische oder mechanische Antriebe oder eine Kombination aus diesen denkbar.

Figur 4 zeigt demgegenüber in schematisiert vereinfachter Darstellung eine Möglichkeit der Realisierung des Antriebes 17 über das Schiebeelement 14. In dieser Ausführung ist der Antrieb in diesem beispielsweise integriert.

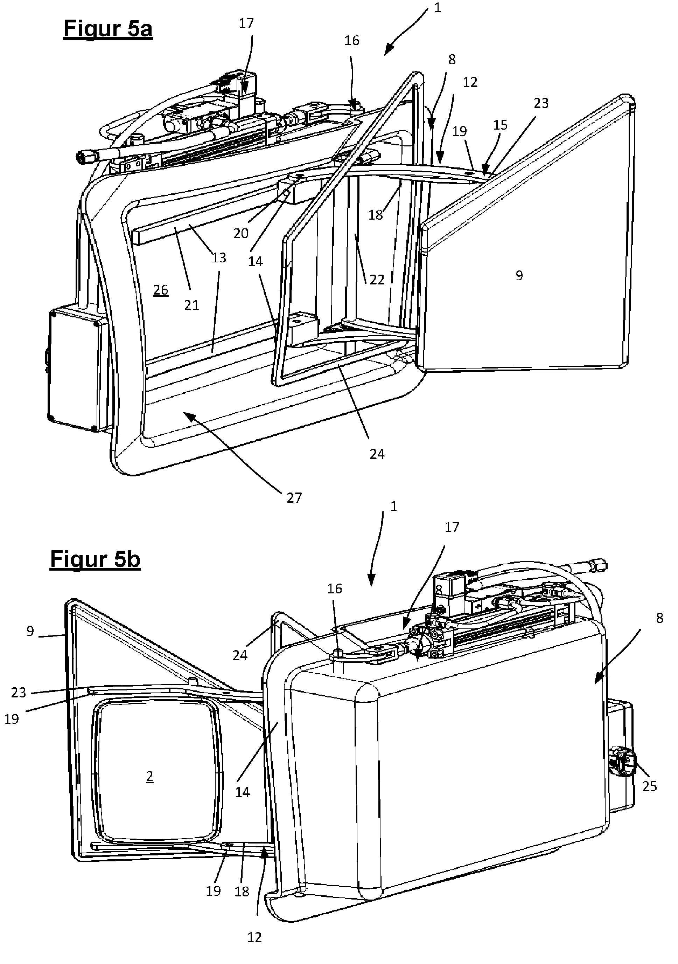

Die Figuren 5a und 5b zeigen anhand zweier Ansichten eine besonders vorteilhafte Ausbildung einer erfindungsgemäß ausgebildeten Außenspiegelvorrichtung 1. Diese ist als vormontierte Baueinheit mit Schnittstelle 25 zum Fahrzeug ausgeführt. Die Außenspiegelvorrichtung 1 umfasst eine Trägereinrichtung 8, welche im dargestellten Fall als eine, einen Innenraum 26 zur Aufnahme der wesentlichen Teile des Koppelmechanismus 10 und des Spiegelelementes 2 in der zweiten Position begrenzendes, zumindest einseitig in Ausrückrichtung des Spiegelelementes 2 eine Öffnung 27 aufweisendes Gebilde ausgeführt ist. Dies kann im einfachsten Fall topfartig oder kastenförmig ausgeformt sein. Komplexere Geometrien sind ebenfalls denkbar. Die Öffnung 27 ist mittels einer Abdeckung 9 verschließbar.

Zur zumindest teilweisen Anordnung und Befestigung an oder in der Wandung 4 des Fahrzeuges und Ausrichtung ist im dargestellten Fall kann die Trägereinrichtung 8 beispielsweise in einer Ausnehmung der Wandung eingebracht werden. Zur Anlage ist ein umlaufender Rand vorgesehen, welcher eine Anlagefläche zur Anlage an der Wandung bildet.

Der Koppelmechanismus 10 umfasst im dargestellten Fall eine Antriebswelle 22, die in der Trägereinrichtung 8, hier vorzugsweise beidseitig in einander gegenüberliegenden Flächenbereichen drehbar gelagert ist. Die Lagerung erfolgt jeweils in einem Drehlager 16. Mit der Antriebswelle 22 drehfest, d.h. frei von einer Relativbewegung zu dieser verbunden ist das Übertragungsglied 18, welches zusammen mit der Antriebswelle 22 die Funktion der Schwinge 12 übernimmt und als Antriebshebel fungiert. Im dargestellten Fall sind zwei Übertragungsglieder 18 beabstandet zueinander angeordnet. Diese sind jeweils über ein Drehgelenk 19 mit einem Übertragungsglied 15 verbunden, welches gelenkig an einem Schiebeelement 14 angelenkt und mit diesem verbunden ist. Dabei sind zwei Schiebeeinrichtungen vorgesehen, umfassend jeweils eine Führung 13 und daran geführte Schiebeelemente 14. Die Führungen 13 sind als Parallelführungen ausgebildet und im dargestellten Fall von in der Trägereinrichtung 8 gelagerten Führungsstangen 21 gebildet.

Die Führungen 13 sind als Geradführungen ausgeführt und ermöglichen eine translatorische Hin- und Her-Bewegung der Schiebeelemente 14.

Die Antriebswelle 21 ist mit einem Antrieb, hier einer hydraulischen oder pneumatischen Stelleinrichtung verbunden, welche die Antriebswelle 21 in Umfangsrichtung um jeweils einen vordefinierten Winkel auslenkt.

Die Übertragungsglieder 15 und 18 sind im einfachsten Fall als Hebelelemente ausgeführt. Das Übertragungselement 15 ist zudem derart ausgeformt, dass es im vom Schiebemechanismus weggerichteten Endbereich die Abdeckung 9 trägt, indem dieses in diesem Bereich parallel zur Abdeckung 9 verlaufend ausgebildet ist. An der Abdeckung 9 bzw. an dem mit diesem verbundenen Übertragungsglied 15 ist ferner das Spiegelelement 2 befestigt, weshalb das Übertragungsglied 15 in diesem Fall auch als Spiegelträger bezeichnet wird.

Die Bewegung der Schwinge 12 wird auf das Übertragungsglied 15 übertragen, wobei die Bewegung durch die translatorische Bewegung des Schiebeelementes 14 aufgrund der Kopplung überlagert wird. Dementsprechend bewegt sich das mit dem Übertragungselement 15 verbundene Spiegelelement 2.

Die Figur 5b zeigt die Ausführung gemäß Figur 5a von hinten in der ausgelenkten Position des Spiegelelementes 2. Erkennbar ist die Schnittstelle 25 zum Fahrzeug und die pneumatische Stelleinrichtung, welche die Funktion des Antriebes 17 übernimmt.

Das Spiegelelement 2 und die Abdeckung sind im dargestellten Fall fest, d.h. frei von der Möglichkeit einer Relativbewegung zueinander verbunden.

Um im eingefahrenen Zustand das Spiegelelement vor Umwelteinflüssen schützen zu können, ist die Außenspiegelvorrichtung 1 vorzugsweise abgedichtet, und insbesondere als gekapselte dichte Einheit ausgebildet.

Im dargestellten Fall ist zumindest die Trägereinrichtung 8 gegenüber der Abdeckung 9 abgedichtet indem eine Dichteinrichtung 24 zwischen beiden vorgesehen ist, die in der zweiten Position des Spiegelelementes dichtend den Innenraum 26 gegenüber der Umgebung verschließt.

### Bezugszeichenliste

- 1: Außenspiegelvorrichtung
- 2: Spiegelelement
- 3: Außenwandbereich
- 4: Wandung
- 5: Schienenfahrzeug
- 6: Führerstand
- 7: Fensterbereich
- 8: Trägereinrichtung
- 9: Abdeckung
- 10: Koppelmechanismus
- 11: Schubschwingen-Anordnung
- 12: Schwinge
- 13: Führung
- 14: Schiebeelement
- 15: Übertragungselement
- 16: Drehgelenk, Drehlager
- 17: Antrieb
- 18: Übertragungsglied
- 19: Drehgelenk
- 20: Drehgelenk
- 21: Führungsstange
- 22: Antriebswelle
- 23: Spiegelträger
- 24: Dichtung
- 25: Schnittstelle
- 26: Innenraum
- 27: Öffnung

## Patentansprüche

1. Außenspiegelvorrichtung für Schienenfahrzeuge, umfassend zumindest ein Spiegelelement, dessen Position über einen antreibbaren Koppelmechanismus verstellbar ist,
**dadurch gekennzeichnet,**
**dass** der Koppelmechanismus als Schwenk-Schiebemechanismus, insbesondere Schubschwingen-Anordnung ausgebildet ist, umfassend zumindest eine ortsfest gelagerte Schwinge und zumindest eine, ein entlang einer Führung führbares Schiebeelement umfassende Schiebeeinrichtung, wobei das Spiegelelement an einem drehbar mit dem Schiebeelement und mit der Schwinge gekoppelten Übertragungsglied wenigstens mittelbar befestigt ist.

2. Außenspiegelvorrichtung für Schienenfahrzeuge nach Anspruch 1,
**dadurch gekennzeichnet,**
**dass** ein Antrieb der Schubschwingen-Anordnung der Schwinge zugeordnet ist.

3. Außenspiegelvorrichtung für Schienenfahrzeuge nach Anspruch 1,
**dadurch gekennzeichnet,**
**dass** ein Antrieb der Schubschwingen-Anordnung der Schiebeeinrichtung zugeordnet ist, insbesondere vom Schiebeelement gebildet ist oder in diesem integriert ist.

4. Außenspiegelvorrichtung für Schienenfahrzeuge nach einem der Ansprüche 1 bis 3,
**dadurch gekennzeichnet,**
**dass** der eine Antrieb der Schubschwingen-Anordnung von einem Antrieb ausgewählt aus der nachfolgenden Gruppe von Antrieben oder einer Kombination aus diesen gebildet ist:
- einem pneumatischen Antrieb/einer pneumatischen Stelleinrichtung
- einem hydraulischen Antrieb/einer hydraulischen Stelleinrichtung
- einem elektrischen Antrieb/einer elektrischen Stelleinrichtung.

5. Außenspiegelvorrichtung für Schienenfahrzeuge nach einem der Ansprüche 1 bis 4,
**dadurch gekennzeichnet,**
**dass** das Spiegelelement gemäß einer der nachfolgend genannten Varianten mit dem Übertragungsglied gekoppelt ist:
- das Spiegelelement ist direkt am Übertragungsglied befestigt:
- das Spiegelelement ist an einem am Übertragungsglied befestigten Bauteil befestigt;
- das Spiegelelement ist am Übertragungsglied oder einem mit diesem verbunden Bauteil relativ zu diesem verschiebbar und/oder verdrehbar gelagert;
- das Spiegelelement ist über einen Übertragungsmechanismus am Übertragungsglied gelagert.

6. Außenspiegelvorrichtung für Schienenfahrzeuge nach einem der Ansprüche 1 bis 5,
**dadurch gekennzeichnet,**
**dass** eine Trägereinrichtung vorgesehen ist und die Trägereinrichtung zumindest eines der nachfolgenden Merkmale aus der Gruppe von Merkmalen umfasst:
- Aufnahmebereiche zur Befestigung und/oder Lagerung von Elementen und Gliedern des Koppelmechanismus
- Aufnahmebereiche zur Befestigung und/oder Lagerung zumindest eines Antriebes
- Anlage- und/oder Befestigungsbereiche zur Anlage/dem Vorsehen von Befestigungselementen zur Befestigung an der Wandung eines Schienenfahrzeuges.

7. Außenspiegelvorrichtung für Schienenfahrzeuge nach Anspruch 6,
**dadurch gekennzeichnet,**
**dass** die Trägereinrichtung als ein, einen zumindest in Betätigungsrichtung des Spiegelelementes offenen Innenraum umschließendes Element ausgeführt ist, geeignet zur zumindest teilweisen Aufnahme durch die den Außenwandbereich beschreibenden Wandung oder Anlage an dieser und die in Betätigungsrichtung des Spiegelelementes vorgesehene Öffnung durch eine Abdeckung verschließbar ist.

8. Außenspiegelvorrichtung für Schienenfahrzeuge nach Anspruch 6 oder 7,
**dadurch gekennzeichnet,**
**dass** zwischen der Abdeckung und der Trägereinrichtung eine Dichteinrichtung vorgesehen ist.

9. Außenspiegelvorrichtung für Schienenfahrzeuge nach einem der vorgenannten Ansprüche,
**dadurch gekennzeichnet,**
**dass** die Schiebeeinrichtung zumindest eine Führung, ausgewählt aus der nachfolgenden Gruppe von Führungen umfasst:
- Kulisse
- Führungsstange oder Schiene
- Ausnehmung
- Einfach- oder Parallelführung
- Geradführung

10. Außenspiegelvorrichtung für Schienenfahrzeuge nach einem der vorgenannten Ansprüche,
**dadurch gekennzeichnet,**
**dass**
- die Schwinge von einer in der Trägereinrichtung drehbar gelagerten Antriebswelle und einem drehfest mit dieser verbundenen Antriebshebel gebildet ist;
- die Schiebeeinrichtung zumindest eine an der Trägereinrichtung gelagerte oder befestigte Führung umfasst, an welcher ein Schiebeelement führbar ist;
- das drehbar am Schiebeelement gelagerte Übertragungselement von einem weiteren Hebel gebildet ist, der mit dem Antriebshebel über ein Drehgelenk verbunden ist und über das Drehgelenk hinaus verlängert ausgebildet ist;
- das Spiegelelement direkt an dem weiteren Hebel im Verlängerungsbereich befestigt ist, wobei eine Abdeckung vorgesehen ist, die entweder separat am Hebel befestigt ist oder aber das Spiegelelement trägt.

11. Schienenfahrzeug, insbesondere Hochgeschwindigkeitszug oder S-Bahn mit zumindest einer Außenspiegelvorrichtung im Bereich der seitlichen Wandung, geeignet zur Erfassung von in Längsrichtung rückwärtigen zur Außenwand benachbarten Bereichen mit zumindest einem Spiegelelement,
**dadurch gekennzeichnet,**
**dass** das Spiegelelement zumindest in zwei Positionen gegenüber einem Außenwandbereich des Schienenfahrzeuges verbringbar ist - eine erste, eine winklige Lage gegenüber dem Außenwandbereich beschreibende Beobachtungsposition zur Erfassung der rückwärtigen Bereiche und eine zweite, am Außenwandbereich anliegende oder zumindest teilweise in die Wandung des Außenwandbereiches versenkbare Lage beschreibende Position.

12. Schienenfahrzeug nach Anspruch 11,
**dadurch gekennzeichnet,**
**dass** die Außenspiegelvorrichtung gemäß einem der Ansprüche 1 bis 10 ausgebildet ist.
